# EUROPÄISCHE PATENTSCHRIFT

(11) **EP 1 057 856 B1**
(45) Veröffentlichungstag und Bekanntmachung des Hinweises auf die Patenterteilung: **01.12.2004**
(21) Anmeldenummer: 00810446.5
(22) Anmeldetag: 23.05.2000
(51) Int. Cl.: C08K 5/00, C08K 5/3492

(54) **Verfahren zur bioziden Ausrüstung von Kunststoffen**
Process to make biocide plastics
Procédé pour produire des matières plastiques biocides

(30) Priorität: 01.06.1999 CH 102999
(43) Veröffentlichungstag der Anmeldung: 06.12.2000
(73) Patentinhaber: Ciba Specialty Chemicals Holding Inc., 4057 Basel (CH)
(72) Erfinder: Herbst, Heinz, 79541 Lörrach (DE); Ergenc, Nadi, 4106 Therwil (CH); Voigt, Wolfgang, 79541 Lörrach (DE)

(56) Entgegenhaltungen:
- EP-A- 0 332 578
- EP-A- 0 542 078

## Beschreibung

Die Erfindung betrifft ein Verfahren zur Hemmung des Wachstums von Photosynthese aktiven Organismen auf Kunststoffoberflächen, biozide Polymerzusammensetzungen, die Verwendung ausgewählter Triazinverbindungen zur Biozidausrüstung von Polymeren sowie die daraus hergestellten Kunststoffartikel.

2-Alkylthio-4,6-diamino-s-triazine sind beispielsweise aus der DT-OS Nr. 1 914 014 als selektive Mittel zur Bekämpfung von Unkräutern und Ungräsem bekannt.

In der EP-A-0 003 749 werden ausgewählte 2-Alkythio-4,6-diamino-s-triazine als wirksame Meerwasseralgizide beschrieben.

Der Einsatz von biozid wirksamen Verbindungen wie zum Beispiel 2,4-Bis(ethylamino)-6-chloro-s-triazin oder N'-(3,4-dichlorphenyl)-N,N-dimethylharnstoff in Polyethylen (PE) oder Polyvinylchlorid (PVC) ist ebenfalls bekannt und z. B. in DD 149 302 beschrieben.

Sollen biozid wirksame Verbindungen in Kunststoffen mit langanhaltender Wirkung eingesetzt werden, so müssen neben ihrer biologischen Aktivität noch weitere Anforderungen erfüllt werden, die sich aus der Verarbeitung (Temperatur und Scherkräfte) sowie dem Einsatz der Kunststoffe (Aussen- bzw. Inneneinsatz) ergeben.

Die bisher im Stand der Technik vorgeschlagenen Verbindungen vermögen in dieser Hinsicht nicht voll zu befriedigen, so dass weiterhin das Bedürfnis besteht, weitere bioaktive Verbindungen zur Verfügung zu haben, welche eine hohe biologische Wirksamkeit aufweisen und den spezifischen Anforderungen an Kunststoffe genügen.

Es wurde nun überraschend gefunden, dass ausgewählte Methylthio-s-Triazine eine hervorragende Verträglichkeit mit Polymeren aufweisen, auch nach längerer Zeit nicht Ausschwitzen und eine hervorragende thermische Beständigkeit während des Einarbeitens in die Polymeren sowie während des Gebrauchs der daraus hergestellten Kunststoffartikel aufweisen.

Die biozide Wirkung bleibt auch nach längerer Gebrauchszeit im Freien im wesentlichen erhalten, sie wird durch Nässe und Feuchtigkeit praktisch nicht beeinflusst, so dass derartig ausgerüstete Kunststoffartikel auch für einen Einsatz geeignet sind, bei dem sie zeitweilig oder ständig von Wasser oder Feuchtigkeit umgeben sind. Sie eignen sich sogar in ungewöhnlich vorteilhafter Weise für alle Materialanwendungen, bei denen das Material für längere Zeit oder dauerhaft mit Wasser im Kontakt ist.

Unter biozider Wirkung soll im Rahmen der vorliegenden Erfindung vor allem eine herbizide Wirkung, das heisst eine Wachstumshemmung von Photosynthese aktiven Organismen, insbesondere von Algen und Moosen verstanden werden.

Ein Gegenstand der Erfindung ist ein Verfahren zur bioziden Ausrüstung von Kunststoffen, ausgewählt aus der Gruppe bestehend aus Polyolefin, Polystyrol, einem halogenhaltigen Polymer, Polyacrylat oder Polymethacrylat, einem Polymer, welches sich von ungesättigten Alkoholen und Aminen bzw. deren Acylderivaten oder Acetalen ableitet, einem Homo- oder Copolymer von cyclischen Ethern, Polyacetal, Polyphenylenoxid oder -sulfid, Polyurethan, Polyamid oder Copolyamid, gesättigter oder ungesättigter Polyester, Polycarbonat, einem Phenol Formaldehyd Harz, einem Epoxidharz oder einem aminoplastischen Harz, dadurch gekennzeichnet, dass man
a) entweder während der Verarbeitung der Kunststoffe oder
b) bei den über eine radikalische Polymerisation hergestellten Kunststoffen bereits während der Polymerisation oder während der Verarbeitung, oder
c) bei den Duroplasten hergestellt aus einem Phenol-Formaldehyd Harz, Epoxidharz oder einem aminoplastischen Harz während der Vernetzungsreaktion mindestens eine Verbindung, ausgewählt aus der Gruppe 2-Methylthio-4-cyclopropylamino-6-(α, β-dimethylpropylamino)-s-triazin, 2-Methylthio-4-cyclopropylamino-6-tert.butylamino-s-triazin, 2-Methylthio-4-ethylamino-6-tert.butylamino-s-triazin und 2-Methylthio-4-ethylamino-6-(α, β-dimethylpropylamino)-s-triazin, zusetzt.

Besonders bevorzugt setzt man 2-Methylthio-4-cyclopropylamino-6-tert.butylamino-s-triazin und/oder 2-Methylthio-4-ethylamino-6-tert.butylamino-s-triazin ein.

Die Verbindungen als solche sind bekannt und z. B. in der EP-A-0 003 749 beschrieben.

Bevorzugt wird die biozid wirksame Verbindung in einer Menge von 0,01 bis 30 Gew.-%, besonders bevorzugt von 0,02-5 Gew.-% und ganz besonders bevorzugt von 0,05% bis 3 Gew.-% bezogen auf den Kunststoff eingesetzt.

Die biozid wirksamen Verbindung kann als Reinsubstanz oder als Abmischung mit anderen Kunststoffen (master batch), wie z. B. LDPE, HDPE, PP oder PET zugegeben werden.

Für das Verfahren geeignete ausgewählte Kunststoffe sind vorstehend genannt, es handelt sich dabei um :
1. Polymere von Mono- und Diolefinen, beispielsweise Polypropylen, Polybuten-1, Poly-4-methylpenten-1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), (VLDPE) und (ULDPE).
   Polyolefine, d.h. Polymere von Monoolefinen, wie sie beispielhaft im vorstehenden Absatz erwähnt sind, insbesondere Polyethylen und Polypropylen, können nach verschiedenen Verfahren hergestellt werden, insbesondere nach den folgenden Methoden:
   a) radikalisch (gewöhnlich bei hohem Druck und hoher Temperatur).
   b) mittels Katalysator, wobei der Katalysator gewöhnlich ein oder mehrere Metalle der Gruppe IVb, Vb, Vlb oder VIII enthält. Diese Metalle besitzen gewöhnlich einen oder mehrere Liganden wie Oxide, Halogenide, Alkoholate, Ester, Ether, Amine, Alkyle, Alkenyle und/oder Aryle, die entweder π- oder σ-koordiniert sein können. Diese Metallkomplexe können frei oder auf Träger fixiert sein, wie beispielsweise auf aktiviertem Magnesiumchlorid, Titan(III)chlorid, Aluminiumoxid oder Siliziumoxid. Diese Katalysatoren können im Polymerisationsmedium löslich oder unlöslich sein. Die Katalysatoren können als solche in der Polymerisation aktiv sein, oder es können weitere Aktivatoren verwendet werden, wie beispielsweise Metallalkyle, Metallhydride, Metallalkylhalogenide, Metallalkyloxide oder Metallalkyloxane, wobei die Metalle Elemente der Gruppen la, lla und/oder IIIa sind. Die Aktivatoren können beipielsweise mit weiteren Ester-, Ether-, Amin- oder Silylether-Gruppen modifiziert sein. Diese Katalysatorsysteme werden gewöhnlich als Phillips, Standard Oil Indiana, Ziegler (-Natta), TNZ (DuPont), Metallocen oder Single Site Katalysatoren (SSC) bezeichnet.
2. Mischungen der unter 1) genannten Polymeren, z.B. Mischungen von Polypropylen mit Polyisobutylen, Polypropylen mit Polyethylen (z.B. PP/HDPE, PP/LDPE) und Mischungen verschiedener Polyethylentypen (z.B. LDPE/HDPE, LLDPE/LDPE)
3. Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat- Copolymere, Ethylen-Vinylacetat-Copolymere und deren Copolymere mit Kohlenstoffmonoxid, oder Ethylen-Acrylsäure-Copolymere und deren Salze (lonomere), sowie Terpolymere von Ethylen mit Propylen und einem Dien, wie Hexadien, Dicyclopentadien oder Ethylidennorbornen; ferner Mischungen solcher Copolymere untereinander und mit unter 1) genannten Polymeren, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z.B. Polyamiden.
4. Kohlenwasserstoffharze (z.B. C₅-C₉) inklusive hydrierte Modifikationen davon (z.B. Klebrigmacherharze) und Mischungen von Polyalkylenen und Stärke.
5. Polystyrol, Poly-(p-methylstyrol), Poly-(α-methylstyrol).
6. Copolymere von Styrol oder α-Methylstyrol mit Dienen oder Acrylderivaten, wie z.B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol.
7. Pfropfcopolymere von Styrol oder α-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 6) genannten Copolymeren, wie sie z.B. als sogenannte ABS-, MBS-, ASA- oder AES-Polymere bekannt sind.
8. Halogenhaltige Polymere, wie z.B. Polychloropren, Chlorkautschuk, chloriertes und bromiertes Copolymer aus Isobutylen-Isopren (Halobutylkautschuk), chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.
9. Polymere, die sich von α,β-ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile.
10. Copolymere der unter 9) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.
11. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit in Punkt 1 genannten Olefinen.
12. Homo- und Copolymere von cyclischen Ethern, wie Polyalkylenglykole, Polyethylenoxyd, Polypropylenoxyd oder deren Copolymere mit Bisglycidylethern.
13. Polyacetale, wie Polyoxymethylen, sowie solche Polyoxymethylene, die Comonomere, wie z.B. Ethylenoxid, enthalten; Polyacetale, die mit thermoplastischen Polyurethanen, Acrylaten oder MBS modifiziert sind.
14. Polyphenylenoxide und -sulfide und deren Mischungen mit Styrolpolymeren oder Polyamiden.
15. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.
16. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, 12/12, Polyamid 11, Polyamid 12, aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z.B. Poly-2,4,4-trimethylhexamethylenterephthalamid oder Poly-mphenylen-isophthalamid. Block-Copolymere der vorstehend genanntenPolyamide mit Polyolefinen, Olefin-Copolymeren, Ionomeren oder chemisch gebundenen oder gepfropften Elastomeren; oder mit Polyethern, wie z.B. mit Polyethylenglykol, Polypropylenglykol oder Polytetramethylenglykol. Femer mit EPDM oder ABS modifizierte Polyamide oder Copolyamide; sowie während der Verarbeitung kondensierte Polyamide ("RIM-Polyamidsysteme").
17. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethem mit Hydroxylendgruppen ableiten; ferner mit Polycarbonaten oder MBS modifizierte Polyester.
18. Polycarbonate und Polyestercarbonate.
19. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.
20. Ungesättigte Polyester leiten sich von Anhydriden bzw. Säuren aromatischer, gesättigter und ungesättigter aliphatischer Dicarbonsäuren sowie aromatischen, gesättigten und ungesättigten aliphatischen Diolen wie Fumarsäure, Maleinsäure, Maleinsäureanhydrid, Phthalsäureanhydrid, Isophthalsäureanhydrid, Terephthalsäure, Adipinsäure, Ethylenglycol, Propandiol, Butandiol, Neopentylglycol, Bisphenol-A, Bisphenol-F, Butendiol, usw. ab. Ausgehärtet werden die ungesättigten Polyester radikalisch in einer Vemetzungscopolymerisation mit Vinylmonomeren wie Styrol, p-Methylstyrol, α-Methylstyrol, Methacrylsäuremethylester, Acrylsäure, Acrylsäuremethylester, Acrylnitril, und Mischungen aus diesen Monomeren.
21. Epoxid Harze leiten sich von di- und mehrfunktionellen Epoxiden ab, die mit Polyaminen wie Diethylentriamin, Triethylentetramin, Tetraethylenpentamin, Methylendianilin, Diaminodiphenylsulfon und Polyaminoamiden bzw. durch Dicarbonsäuren und deren Anhydriden wie Hexahydrophthalsäureanhydrid, Phthalsäureanhydrid, Pyromellitsäureanhydrid, Methyl-Nadinsäureanhydrid, vernetzt werden.

Bevorzugte Kunststoffe sind thermoplastische Kunststoffe.

Unter den Duroplasten sind vernetzte Epoxidharze, ungesättigte Polyester, Phenol-Formaldehyd-, Harnstoff-Formaldehyd- und Melamin-Formaldehydharze bevorzugt.

Bevorzugte Kunststoffe, sind Polyethylen, Polypropylen, Polyvinylchlorid, Polycarbonat, Polyacrylat, Polymethacrylat, Polyamid 6, Polyamid 6.6 oder Copolyamid, Polyethylentherephthalat, Poylbutylentherephthalat, ein ungesättigtes Polyesterharz (UP-Harz), ein Epoxidharz, ein Phenol Formaldehyd Harz oder Melaminharz.

Besonders bevorzugt sind Polyethylen, Polypropylen, Polyvinylchlorid, Polycarbonat, Polyacrylat, Polymethacrylate, Polyethylentherephthalat, ein ungesättigtes Polyesterharz, ein Epoxidharz, ein Phenol Formaldehyd Harz oder Melaminharz.

Ganz besonders bevorzugt sind LDPE, HDPE, Polypropylen, Polyethylentherephthalat, UP-Harz oder Polymethacrylate.

Grundsätzlich kann die biozid wirksame Verbindung bereits bei der Herstellung der Polymeren zugegeben werden, sofern sie den Herstellungsprozess nicht stört.

Bei der Herstellung von Polyacrylat bzw. Polymethacrylat und vernetzten Polyetherharzen ist es eine vorteilhafte Verfahrensmassnahme, dass man die biozid wirksame Verbindung bereits bei der Polymerisation von Acrylat oder Methacrylat bzw. bei der Vernetzung der ungesättigten Polyesterharze zusetzt.

Bei der Herstellung von Duroplasten aus Epoxid Harzen, Phenol-Formaldehyd Harzen und Melamin Harzen ist es ebenfalls vorteilhaft, dass man die biozid wirksame Verbindung bereits bei der Vernetzungsreaktion zusetzt.

Neben den vorstehend genannten biozid wirksamen Verbindungen können noch weitere Biozide zugesetzt werden.

In der Praxis werden Wirkstoffe vielfach in Kombination mit andem Bioziden eingesetzt. So können die Verbindungen in Kombination mit Cu₂O, CuSCN, Zinkoxid, Triorganozinnverbindungen, wie beispielsweise Tributylzinnfluorid oder Triphenylzinnchlorid, metallischem Kupfer oder Triazinen oder allgemein mit solchen Verbindungen, die dem Fachmann als gegen tierischen oder pflanzlichen Bewuchs wirksam bekannt sind, kombiniert werden. Der Fachmann findet geeignete Verbindungen z. B. in "The Pesticide Manual", Herausgeber: British Crop Protection Council, 1997.

Beispiele für solche weiteren Biozide sind:
a) Organo-Schwefelverbindungen, z.B. Methylen-dithiocyanat (MBT), Isothiazolone oder 3,5-Dimethyl-tetrahydro-1,3,5-2H-thiodiazin-2-thion (DMTT).
b) Chlorierte Phenole, wie beispielsweise Natrium-pentachlorphenolat, 2,4,4' Trichloro-2-hydroxy-diphenylether oder 4,4' Dichloro-2-hydroxy-diphenylether. Solche Verbindungen zeichnen sich durch ein sehr breites Wirkungsspektrum aus.
c) Kupfersalze, wie beispielsweise Kupfersulfat und Kupfemitrat als zusätzliche Algizide.
d) Triorganozinnverbindungen wie beispielsweise Bis-tributylzinnoxid (TBTO), insbesondere als Fungizide und Algizide.
e) Bakterizide wie beispielsweise Silbersalze, 2.3.5.6-Tetrachlor-4(methylsulfonyl)-pyridin, 4,5-Dichlor-2-n-octyt-4-isothiazolin-3-on, N-Butyl-benzisothiazolin, 10.10'-Oxybisphenoxyarsin, Zink-2-pyridinthiol-1-oxid oder Zinkoxid.

Neben weiteren Bioziden kann der Kunststoff auch zusätzlich eine oder mehrere Komponenten aus der Gruppe der Pigmente, Farbstoffe, Füllstoffe, Haftungsverbesserer, Antioxidantien oder Lichtstabilisatoren enthalten.

Die Pigmente sind beispielsweise Russ, Graphit, Titandioxid, Eisenoxid, Aluminiumbronze, Phthalocyanine oder organische Buntpigmente sowie deren Verschnitte mit anorganischen Pigmenten.

Beispiele für Füllstoffe sind Talk, Aluminiumoxid, Aluminiumsilikat, Baryt, Glimmer, Glasfaser, Glaskugeln oder Siliciumdioxid.

Die biozid wirksamen Verbindungen können auch auf einen Trägerstoff (z. B. Zeoliten) aufgebracht werden und mit diesem zusammen eingearbeitet werden.

Bevorzugt enthält der Kunststoff zusätzliche Verarbeitungsstabilisatoren und/oder Lichtstabilisatoren. Beispiele sind nachstehend genannt.

### 1. Antioxidantien

1.1. Alkylierte Monophenole, z.B. 2,6-Di-tert-butyl-4-methylphenol, 2-Butyl-4,6-dimethylphenol, 2,6-Di-tert-butyl-4-ethylphenol, 2,6-Di-tert-butyl-4-n-butylphenol, 2,6-Di-tert-butyl-4-isobutylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert-butyl-4-methoxymethylphenol, lineare oder in der Seitenkette verzweigte Nonylphenole wie z.B. 2,6-Di-nonyl-4-methylphenol, 2,4-Dimethyl-6-(1'-methyl-undec-1'-yl)-phenol, 2,4-Dimethyl-6-(1'-methyl-heptadec-1'-yl)-phenol, 2,4-Dimethyl-6-(1'-methyl-tridec-1'-yl)-phenol und Mischungen davon.
1.2. Alkylthiomethylphenole, z.B. 2,4-Di-octylthiomethyl-6-tert-butylphenol, 2,4-Di-octylthiomethyl-6-methylphenol, 2,4-Di-octylthiomethyl-6-ethylphenol, 2,6-Di-dodecylthiomethyl-4-nonylphenol.
1.3. Hydrochinone und alkylierte Hydrochinone, z.B. 2,6-Di-tert-butyl-4-methoxyphenol, 2,5-Di-tert-butyl-hydrochinon, 2,5-Di-tert-amyl-hydrochinon, 2,6-Diphenyl-4-octadecyloxyphenol, 2,6-Di-tert-butyl-hydrochinon, 2,5-Di-tert-butyl-4-hydroxyanisol, 3,5-Di-tert-butyl-4-hydroxyanisol, 3,5-Di-tert-butyl-4-hydroxyphenyl-stearat, Bis(3,5-di-tert-butyl-4-hydroxyphenyl)adipat.
1.4. Tocopherole, z.B. α-Tocopherol, β-Tocopherol, γ-Tocopherol, δ-Tocopherol und Mischungen davon (Vitamin E).
1.5. Hydroxylierte Thiodiphenylether, z.B. 2,2'-Thio-bis(6-tert-butyl-4-methylphenol), 2,2'-Thio-bis(4-octylphenol), 4,4'-Thio-bis(6-tert-butyl-3-methylphenol), 4,4'-Thio-bis-(6-tert-butyl-2-methylphenol), 4,4'-Thio-bis(3,6-di-sec.-amylphenol), 4,4'-Bis(2,6-dimethyl-4-hydroxyphenyl)-disulfid.
1.6. Alkyliden-Bisphenole, z.B. 2,2'-Methylen-bis(6-tert-butyl-4-methylphenol), 2,2'-Methylenbis(6-tert-butyl-4-ethylphenol), 2,2'-Methylen-bis[4-methyl-6-(α-methylcyclohexyl)-phenol], 2,2'-Methylen-bis(4-methyl-6-cyclohexylphenol), 2,2'-Methylen-bis(6-nonyl-4-methylphenol), 2,2'-Methylen-bis(4,6-di-tert-butylphenol), 2,2'-Ethyliden-bis(4,6-di-tert-butylphenol), 2,2'-Ethyliden-bis(6-tert-butyl-4-isobutylphenol), 2,2'-Methylen-bis[6-(α-methylbenzyl)-4-nonylphenol], 2,2'-Methylen-bis[6-(α,α-dimethylbenzyl)-4-nonylphenol], 4,4'-Methylen-bis(2,6-ditert-butylphenol), 4,4'-Methylen-bis(6-tert-butyl-2-methylphenol), 1,1-Bis(5-tert-butyl-4-hydroxy-2-methylphenyl)-butan, 2,6-Bis(3-tert-butyl-5-methyl-2-hydroxybenzyl)-4-methylphenol, 1,1,3-Tris(5-tert-butyl-4-hydroxy-2-methylphenyl)-butan, 1,1-Bis(5-tert-butyl-4-hydroxy-2-methyl-phenyl)-3-n-dodecylmercaptobutan, Ethylenglycol-bis[3,3-bis(3'-tert-butyl-4'-hydroxyphenyl)-butyrat), Bis(3-tert-butyl-4-hydroxy-5-methyl-phenyl)-dicyclopentadien, Bis[2-(3'-tert-butyl-2'-hydroxy-5'-methyl-benzyl)-6-terl-butyl-4-methyl-phenyl]-terephthalat, 1,1-Bis(3,5-dimethyl-2-hydroxyphenyl)-butan, 2,2-Bis(3,5-di-tert-butyl-4-hydroxyphenyl)-propan, 2,2-Bis(5-tert-butyl-4-hydroxy-2-methylphenyl)-4-n-dodecylmercapto-butan, 1,1,5,5-Tetra-(5-tert-butyl-4-hydroxy-2-methylphenyl)-pentan.
1.7. O-, N- und S-Benzylverbindungen, z.B. 3,5,3',5',Tetra-tert-butyl-4,4'-dihydroxydibenzylether, Octadecyl-4-hydroxy-3,5-dimethylbenzyl-mercaptoacetat, Tridecyl-4-hydroxy-3,5-di-tert-butylbenzyl-mercaptoacetat, Tris(3,5-di-tert-butyl-4-hydroxybenzyl)-amin, Bis(4-tert-butyl-3-hydroxy-2,6-dimethylbenzyl)-dithioterephthalat, Bis(3,5-di-tert-butyl-4-hydroxybenzyl)-sulfid, Isooctyl-3,5-di-tert-butyl-4-hydroxybenzyl-mercaptoacetat.
1.8. Hydroxybenzylierte Malonate, z.B. Dioctadecyl-2,2-bis(3,5-di-tert-butyl-2-hydroxybenzyl)-malonat, Di-octadecyl-2-(3-tert-butyl-4-hydroxy-5-methylbenzyl)-malonat, Di-dodecylmercaptoethyl-2,2-bis(3,5-di-tert-butyl-4-hydroxybenzyl)-malonat, Di-[4-(1,1,3,3-tetramethylbutyl)-phenyl]-2,2-bis(3,5-di-tert-butyl-4-hydroxybenzyl)-malonat.
1.9. Hydroxybenzyl-Aromaten, z.B. 1,3,5-Tris(3,5-di-tert-butyl-4-hydroxybenzyl)-2,4,6-trimethylbenzol, 1,4-Bis(3,5-di-tert-butyl-4-hydroxybenzyl)-2,3,5,6-tetramethylbenzol, 2,4,6-Tris(3,5-di-tert-butyl-4-hydroxybenzyl)-phenol.
1.10. Triazinverbindungen, z.B. 2,4-Bis-octylmercapto-6-(3,5-di-tert-butyl-4-hydroxyanilino)-1,3,5-triazin, 2-Octy(mercapto-4,6-bis(3,5-di-tert-butyl-4-hydroxyanilino)-1,3,5-triazin, 2-Octylmercapto-4,6-bis(3,5-di-tert-butyl-4-hydroxyphenoxy)-1,3,5-triazin, 2,4,6-Tris(3,5-di-tert-butyl-4-hydroxyphenoxy)-1,2,3-triazin, 1,3,5-Tris(3,5-di-tert-butyl-4-hydroxybenzyl)-isocyanurat, 1,3,5-Tris(4-tert-butyl-3-hydroxy-2,6-dimethylbenzyl)-isocyanurat, 2,4,6-Tris(3,5-di-tert-butyl-4-hydroxyphenylethyl)-1,3,5-triazin, 1,3,5-Tris(3,5-di-tert-butyl-4-hydroxyphenylpropionyl)-hexahydro-1,3,5-triazin, 1,3,5-Tris(3,5-dicyclohexyl-4-hydroxybenzyl)-isocyanurat.
1.11. Benzylphosphonate, z.B. Dimethyl-2,5-di-tert-butyl-4-hydroxybenzylphosphonat, Diethyl-3,5-di-tert-butyl-4-hydroxybenzylphosphonat, Dioctadecyl-3,5-di-tert-butyl-4-hydroxybenzylphosphonat, Dioctadecyl-5-tert-butyl-4-hydroxy-3-methylbenzylphosphonat, Ca-Salz des 3,5-Di-tert-butyl-4-hydroxybenzyl-phosphonsäure-monoethylesters.
1.12. Acylaminophenole, z.B. 4-Hydroxy-laurinsäureanilid, 4-Hydroxystearinsäureanilid, N-(3,5-di-tert-butyl-4-hydroxyphenyl)-carbaminsäureoctylester.
1.13. Ester der β-(3,5-Di-tert-butyl-4-hydroxyphenyl)-propionsäure mit ein- oder mehrwertigen Alkoholen, wie z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
1.14. Ester der β-(5-tert-Butyl-4-hydroxy-3-methylphenyl)-propionsäure mit ein- oder mehrwertigen Alkoholen, wie z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
1.15. Ester der β-(3,5-Dicyclohexyl-4-hydroxyphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
1.16. Ester der 3,5-Di-tert-butyl-4-hydroxyphenylessigsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
1.17. Amide der β-(3,5-Di-tert-butyl-4-hydroxyphenyl)-propionsäure, wie z.B. N,N'-Bis(3,5-di-tert-butyl-4-hydroxyphenylpropionyl)-hexamethylendiamid, N,N'-Bis(3,5-di-tert-butyl-4-hydroxyphenylpropionyl)-trimethylendiamid, N,N'-Bis(3,5-di-tert-butyl-4-hydroxyphenylpropionyl)-hydrazid, N,N'-Bis[2-(3-[3,5-di-tert-butyl-4-hydroxyphenyl]-propionyloxy)ethyl]oxamid (Naugard®XL-1 der Firma Uniroyal).
1.18. Ascorbinsäure (Vitamin C).
1.19. Aminische Antioxidantien, wie z.B. N,N'-Di-isopropyl-p-phenylendiamin, N,N'-Di-secbutyl-p-phenylendiamin, N,N'-Bis(1,4-dimethyl-pentyl)-p-phenylendiamin, N,N'-Bis(1-ethyl-3-methyl-pentyl)-p-phenylendiamin, N,N'-Bis(1-methyl-heptyl)-p-phenylendiamin, N,N'-Dicyclohexyl-p-phenylendiamin, N,N'-Diphenyl-p-phenylendiamin, N,N'-Di-(2-naphthyl)-p-phenylendiamin, N-lsopropyl-N'-phenyl-p-phenylendiamin, N-(1,3-Dimethyl-butyl)-N'-phenyl-p-phenylendiamin, N-(1-Methyl-heptyl)-N'-phenyl-p-phenylendiamin, N-Cyclohexyl-N'-phenyl-p-phenylendiamin, 4-(p-Toluol-sulfonamido)-diphenylamin, N,N'-Dimethyl-N,N'-di-sec-butyl-p-phenylendiamin, Diphenylamin, N-Allyldiphenylamin, 4-lsopropoxy-diphenylamin, N-Phenyl-1-naphthylamin, N-(4-tert-Octylphenyl)-1-naphthylamin, N-Phenyl-2-naphthylamin, octyliertes Diphenylamin, z.B. p,p'-Di-tert-octyldiphenylamin, 4-n-Butylaminophenol, 4-Butyrylamino-phenol, 4-Nonanoylamino-phenol, 4-Dodecanoylamino-phenol, 4-Octadecanoylamino-phenol, Di-(4-methoxyphenyl)-amin, 2,6-Di-tert-butyl-4-dimethylamino-methyl-phenol, 2,4'-Diamino-diphenylmethan, 4,4'-Diamino-diphenylmethan, N,N,N',N'-Tetramethyl-4,4'-diamino-diphenylmethan, 1,2-Di-[(2-methyl-phenyl)-amino]-ethan, 1,2-Di-(phenylamino)-propan, (o-Tolyl)-biguanid, Di-[4-(1',3'-dimethyl-butyl)-phenyl]amin, tert-octyliertes N-Phenyt-1-naphthylamin, Gemisch aus mono- und dialkylierten tert-Butyl/tert-Octyldiphenylaminen, Gemisch aus mono- und dialkylierten Nonyldiphenylaminen, Gemisch aus mono- und dialkylierten Dodecyldiphenylaminen, Gemisch aus mono- und dialkylierten Isopropyl/lsohexyl-diphenylaminen, Gemische aus mono- und dialkylierten tert-Butyldiphenylaminen, 2,3-Dihydro-3,3-dimethyl-4H-1,4-benzothiazin, Phenothiazin, Gemisch aus mono- und dialkylierten tert-Butyl/tert-Octyl-phenothiazinen, Gemisch aus mono- und dialkylierten tert-Octyl-phenothiazinen, N-Allylphenothiazin, N,N,N',N'-Tetraphenyl-1,4-diaminobut-2-en, N,N-Bis-(2,2,6,6-tetramethyl-piperidin-4-yl-hexamethylendiamin, Bis-(2,2,6,6-tetramethylpiperidin-4-yl)-sebacat, 2,2,6,6-Tetramethypiperidin-4-on, 2,2,6,6-Tetramethylpiperidin-4-ol.

### 2. UV-Absorber und Lichtschutzmittel

2.1. 2-(2'-Hydroxyphenyl)-benzotriazole, wie z.B. 2-(2'-Hydroxy-5'-methylphenyl)-benzotriazol, 2-(3',5'-Di-tert-butyl-2'-hydroxyphenyl)-benzotriazol, 2-(5'-tert-Butyl-2'-hydroxyphenyl)-benzotriazol, 2-(2'-Hydroxy-5'-(1,1,3,3-tetramethylbutyl)phenyl)-benzotriazol, 2-(3',5'-Di-tertbutyl-2'-hydroxyphenyl)-5-chlor-benzotriazol, 2-(3'-tert-Butyl-2'-hydroxy-5'-methylphenyl)-5-chlor-benzotriazol, 2-(3'-sec-Butyl-5'-tert-butyl-2'-hydroxyphenyl)-benzotriazot, 2-(2'-Hydroxy-4'-octoxyphenyl)-benzotriazol, 2-(3',5'-Di-tert-amyl-2'-hydroxyphenyl)-benzotriazol, 2-(3',5'-Bis(α,α-dimethylbenzyl)-2'-hydroxyphenyl)-benzotriazol, 2-(3'-tert-Butyl-2'-hydroxy-5'-(2-octyloxycarbonylethyl)phenyl)-5-chlor-benzotriazol, 2-(3'-tert-Butyl-5'-[2-(2-ethylhexyloxy)-carbonylethyl]-2'-hydroxyphenyl)-5-chlor-benzotriazol, 2-(3'-tert-Butyl-2'-hydroxy-5'-(2-methoxycarbonytethyl)phenyl)-5-chlor-benzotriazol, 2-(3'-tert-Butyl-2'-hydroxy-5'-(2-methoxycarbonylethyl)phenyl)-benzotriazol, 2-(3'-tert-Butyl-2'-hydroxy-5'-(2-octyloxycarbonylethyl)-phenyl)-benzotriazol, 2-(3'-tert-Butyl-5'-[2-(2-ethylhexyloxy)carbonylethyl]-2'-hydroxyphenyl)-benzotriazol, 2-(3'-Dodecyl-2'-hydroxy-5'-methylphenyl)-benzotriazol, 2-(3'-tert-Butyl-2'-hydroxy-5'-(2-isooctyloxycarbonylethyl)phenyl-benzotriazol, 2,2'-Methylen-bis[4-(1,1,3,3-tetramethylbutyl)-6-benzotriazol-2-yl-phenol]; Umesterungsprodukt von 2-[3'-tert-Buty1-5'-(2-methoxycarbonylethyl)-2'-hydroxy-phenyl]-benzotriazol mit Polyethylenglycol 300; 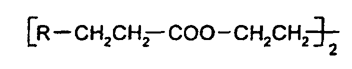 mit R = 3'-tert-Butyl-4'-hydroxy-5'-2H-benzotriazol-2-yl-phenyl; 2-[2'-Hydroxy-3'-(α,α-dimethylbenzyl)-5'-(1,1,3,3-tetramethylbutyl)-phenyl]-benzotriazol; 2-[2'-Hydroxy-3'-(1,1,3,3-tetramethylbutyl)-5'-(α,α-dimethylbenzyl)-phenyl]-benzotriazol.
2.2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.
2.3. Ester von gegebenenfalls substituierten Benzoesäuren, wie z.B. 4-tert-Butyl-phenylsalicylat, Phenylsalicylat, Octylphenyl-salicylat, Dibenzoylresorcin, Bis(4-tert-butylbenzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäure-octadecylester, 3,5-Di-tert-butyl-4-hydroxybenzoesäure-2-methyl-4,6-di-tert-butylphenylester.
2.4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw.-butylester, α-Carbomethoxy-p-methoxy-zimtsäure-methylester, N-(β-Carbomethoxy-β-cyanovinyl)-2-methyl-indolin.
2.5. Nickelverbindungen, wie z.B. Nickelkomplexe des 2,2'-Thio-bis[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert-butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.
2.6. Sterisch gehinderte Amine, wie z.B. Bis(2,2,6,6-tetramethyl-piperidin-4-yl)-sebacat, Bis-(2,2,6,6-tetramethyl-piperidin-4-yl)-succinat, Bis(1,2,2,6,6-pentamethylpiperidin-4-yl)-sebacat, Bis(1-octyloxy-2,2,6,6-tetramethylpiperidin-4-yl)-sebacat, n-Butyl-3,5-di-tert-butyl-4-hydroxybenzyl-malonsäure-bis(1,2,2,6,6-pentamethylpiperidyl)-ester, Kondensationsprodukt aus 1-Hydroxyethyl-2,2,6,6-tetramethyl-4-hydroxypiperidin und Bernsteinsäure, lineare oder cyclische Kondensationsprodukte aus N,N'-Bis(2,2,6,6-Tetramethyl-4-piperidyl)-hexamethylendiamin und 4-tert-Octylamino-2,6-dichlor-1,3,5-s-triazin, Tris(2,2,6,6-tetramethyl-4-piperidyl)-nitrilotriacetat, Tetrakis(2,2,6,6-tetramethyl-4-piperidyl)-1,2,3,4-butantetraoat, 1,1'-(1,2-Ethandiyl)-bis(3,3,5,5-tetramethyl-piperazinon), 4-Benzoyl-2,2,6,6-tetramethylpiperidin, 4-Stearyloxy-2,2,6,6-tetramethylpiperidin, Bis(1,2,2,6,6-pentamethylpiperidyl)-2-n-butyl-2-(2-hydroxy-3,5-di-tert-butylbenzyl)-malonat, 3-n-Octyl-7,7,9,9-tetramethyl-1,3,8-triazaspiro[4.5]decan-2,4-dion, Bis(1-octyloxy-2,2,6,6-tetramethylpiperidyl)-sebacat, Bis(1-octyloxy-2,2,6,6-tetramethylpiperidyl)-succinat, lineare oder cyclische Kondensationsprodukte aus N,N'-Bis(2,2,6,6-tetramethyl-4-piperidyl)-hexamethylendiamin und 4-Morpholino-2,6-dichlor-1,3,5-triazin, Kondensationsprodukt aus 2-Chlor-4,6-di-(4-n-butylamino-2,2,6,6-tetramethylpiperidyl)-1,3,5-triazin und 1,2-Bis(3-aminopropylamino)ethan, Kondensationsprodukt aus 2-Chlor-4,6-di-(4-n-butylamino-1,2,2,6,6-pentamethylpiperidyl)-1,3,5-triazin und 1,2-Bis(3-aminopropylamino)-ethan, 8-Acetyl-3-dodecyl-7,7,9,9-tetramethyl-1,3,8-triazaspiro[4.5]decan-2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)-pyrrolidin-2,5-dion, Gemisch von 4-Hexadecyloxy- und 4-Stearyloxy-2,2,6,6-tetramethylpiperidin, Kondensationsprodukt aus N,N'-Bis(2,2,6,6-tetramethyl-4-piperidyl)-hexamethylendiamin und 4-Cyclohexylamino-2,6-dichlor-1,3,5-triazin, Kondensationsprodukt aus 1,2-Bis(3-aminopropylamino)-ethan und 2,4,6-trichlor-1,3,5-triazin sowie 4-Butylamino-2,2,6,6-tetramethyl-piperidin (CAS Reg. No. [136504-96-6]); N-(2,2,6,6-tetramethyl-4-piperidyl)-n-dodecylsuccinimid, N-(1,2,2,6,6-pentamethyl-4-piperidyl)-n-dodecylsuccinimid, 2-Undecyl-7,7,9,9-tetramethyl-1-oxa-3,8-diaza-4-oxo-spiro[4,5]decan, Umsetzungsprodukt von 7,7,9,9-Tetramethyl-2-cycloundecyl-1-oxa-3,8-diaza-4-oxospiro-[4,5]decan und Epichlorhydrin, 1,1-Bis(1,2,2,6,6-pentamethyl-4-piperidyloxycarbonyl)-2-(4-methoxyphenyl)-ethen, N,N'-Bis-formyl-N,N'-bis(2,2,6,6-tetramethyl-4-piperidyl)-hexamethylendiamin, Diester der 4-Methoxy-methylen-malonsäure mit 1,2,2,6,6-Pentamethyl-4-hydroxy-piperidin, Poly[methylpropyl-3-oxy-4-(2,2,6,6-tetramethyl-4-piperidyl)]-siloxan, Reaktionsprodukt aus Maleinsäureanhydrid-α-olefin-copolymer und 2,2,6,6-Tetramethyl-4-aminopiperidin oder 1,2,2,6,6-Pentamethyl-4-aminopiperidin.
2.7. Oxalsäurediamide, wie z.B. 4,4'-Di-octyloxy-oxanilid, 2,2'-Diethoxy-oxanilid, 2,2'-Di-octyloxy-5,5'-di-tert-butyl-oxanilid, 2,2'-Di-dodecyloxy-5,5'-di-tert-butyl-oxanilid, 2-Ethoxy-2'-ethyl-oxanilid, N,N'-Bis(3-dimethylaminopropyl)-oxalamid, 2-Ethoxy-5-tert-butyl-2'-ethyloxanilid und dessen Gemisch mit 2-Ethoxy-2'-ethyl-5,4'-di-tert-butyl-oxanilid, Gemische von o- und p-Methoxy- sowie von o- und p-Ethoxy-di-substituierten Oxaniliden.
2.8. 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-(2-Hydroxy-4-tridecyloxyphenyl)-4,6-bis(2,4-dimethylphenyl)-1,3,5-triazin, 2-[2-Hydroxy-4-(2-hydroxy-3-butyloxy-propyloxy)phenyl]-4,6-bis(2,4-dimethylphenyl)-1,3,5-triazin, 2-[2-Hydroxy-4-(2-hydroxy-3-octyloxy-propyloxy)phenyl]-4,6-bis(2,4-dimethylphenyl)-1,3,5-triazin, 2-[4-(dodecyloxy/tridecyloxy-2-hydroxypropoxy)-2-hydroxy-phenyl]-4,6-bis(2,4-dimethylphenyl)-1,3,5-triazin, 2-[2-Hydroxy-4-(2-hydroxy-3-dodecyloxy-propoxy)phenyl]-4,6-bis(2,4-dimethylphenyl)-1,3,5-triazin, 2-(2-Hydroxy-4-hexyloxy)phenyl-4,6-diphenyl-1,3,5-triazin, 2-(2-Hydroxy-4-methoxyphenyl)-4,6-diphenyl-1,3,5-triazin, 2,4,6-Tris[2-hydroxy-4-(3-butoxy-2-hydroxy-propoxy)phenyl]-1,3,5-triazin, 2-(2-Hydroxyphenyl)-4-(4-methoxyphenyl)-6-phenyl-1,3,5-triazin, 2-{2-Hydroxy-4-[3-(2-ethylhexyl-1-oxy)-2-hydroxypropyloxy]phenyl}-4,6-bis(2,4-dimethylphenyl)-1,3,5-triazin.
3. Metalldesaktivatoren, wie z.B. N,N'-Diphenyloxalsäurediamid, N-Salicylal-N'-salicyloylhydrazin, N,N'-Bis(salicyloyl)-hydrazin, N,N'-Bis(3,5-di-tert-butyl-4-hydroxyphenylpropionyl)-hydrazin, 3-Salicyloylamino-1,2,4-triazol, Bis(benzyliden)-oxalsäuredihydrazid, Oxanilid, lsophthalsäure-dihydrazid, Sebacinsäure-bis-phenylhydrazid, N,N'-Diacetyl-adipinsäure-dihydrazid, N,N'-Bis-salicyloyl-oxalsäure-dihydrazid, N,N'-Bis-salicyloyl-thiopropionsäure-dihydrazid.
4. Phosphite und Phosphonite, wie z.B. Triphenylphosphit, Diphenylalkylphosphite, Phenyldialkylphosphite, Tris(nonylphenyl)-phosphit, Trilaurylphosphit, Trioctadecylphosphit, Distearyl-pentaerythritdiphosphit, Tris(2,4-di-tert-butylphenyl)-phosphit, Diisodecylpentaerythrit-diphosphit, Bis(2,4-di-tert-butylphenyl)-pentaerythritdiphosphit, Bis-(2,6-di-tert-butyl-4-methylphenyl)-pentaerythritdiphosphit, Bis-isodecyloxy-pentaerythritdiphosphit, Bis(2,4-di-tert-butyl-6-methylphenyl)-pentaerythritdiphosphit, Bis-(2,4,6-tri-tert-butylphenyl)-pentaerythritdiphosphit, Tristearyl-sorbit-triphosphit, Tetrakis(2,4-di-tert-butylphenyl)-4,4'-biphenylen-diphosphonit, 6-Isooctyloxy-2,4,8,10-tetra-tert-butyl-12H-dibenz[d,g]-1,3,2-dioxaphosphocin, 6-Fluor-2,4,8,10-tetra-tert-butyl-12-methyl-dibenz[d,g]-1,3,2-dioxaphosphocin, Bis(2,4-di-tert-butyl-6-methylphenyl)-methylphosphit, Bis(2,4-di-tert-butyl-6-methylphenyl)-ethylphosphit, 2,2',2"-Nitrilo[triethyl-tris(3,3',5,5'-tetra-tert-butyl-1,1'-biphenyl-2,2'-diyl)-phosphit], 2-Ethylhexyl-(3,3',5,5'-tetra-tert-butyl-1,1'-biphenyl-2,2'-diyl)-phosphit.
   Besonders bevorzugt werden die folgenden Phosphite verwendet:
   Tris(2,4-di-tert-butylphenyl)-phosphit (Irgafos®168, Ciba-Geigy), Tris(nonylphenyl)-phosphit, 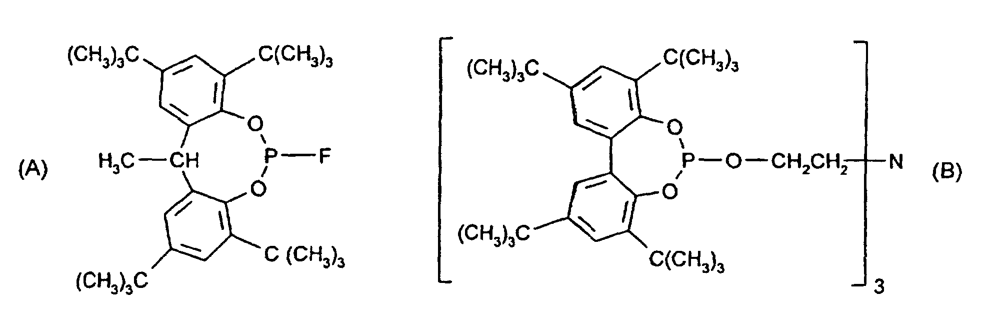 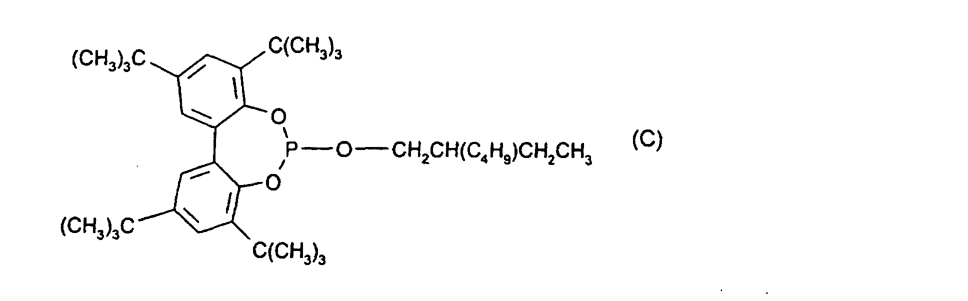 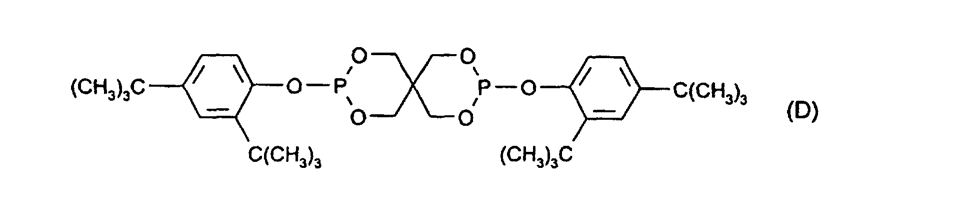 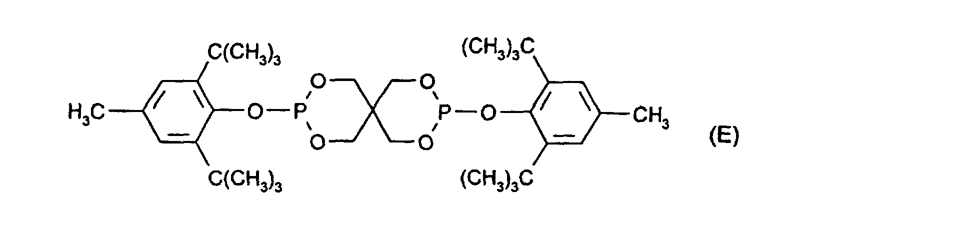 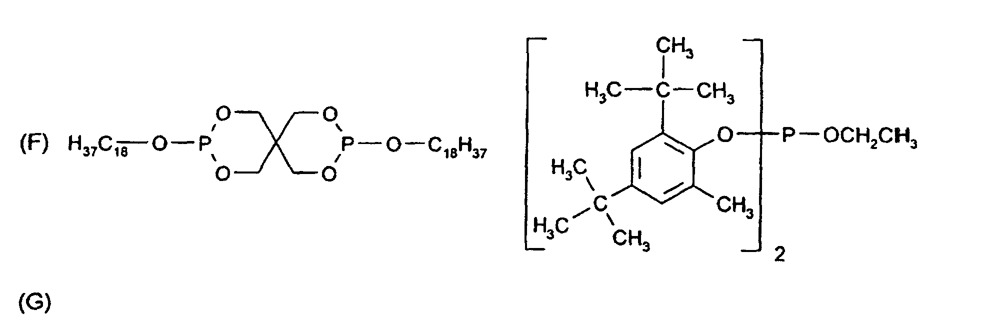
5. Hydroxylamine wie z.B. N,N-Dibenzylhydroxylamin, N,N-diethylhydroxylamin, N,N-Dioctylhydroxylamin, N,N-Dilaurylhydroxylamin, N,N-Ditetradecylhydroxylamin, N,N-Dihexadecylhydroxylamin, N,N-Dioctadecylhydroxylamin, N-Hexadecyl-N-octadecylhydroxylamin, N-Heptadecyl-N-octadecylhydroxylamin, N,N-Dialkylhydroxylamin aus hydrierten Talgfettaminen.
6. Nitrone wie z.B. N-Benzyl-alpha-phenyl-nitron, N-Ethyl-alpha-methyl-nitron, N-Octyl-alphaheptyl-nitron, N-Lauryl-alpha-undecyl-nitron, N-Tetradecyl-alpha-tridecyl-nitron, N-Hexadecyl-alpha-pentadecyl-nitron, N-Octadecyl-alpha-heptadecyl-nitron, N-Hexadecyl-alpha-heptadecyl-nitron, N-Octadecyl-alpha-pentadecyl-nitron, N-Heptadecyl-alpha-heptadecyl-nitron, N-Octadecyl-alpha-hexadecyl-nitron, Nitrone abgeleitet von N,N-Dialkylhydroxylaminen hergestellt aus hydrierten Talgfettaminen.
7. Thiosynergisten wie z.B. Thiodipropionsäure-di-laurylester oder Thiodipropionsäure-distearylester.
8. Peroxidzerstörende Verbindungen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis(β-dodecylmercapto)-propionat.
9. Polyamidstabilisatoren, wie z.B. Kupfersalze in Kombination mit Jodiden und/oder Phosphorverbindungen und Salze des zweiwertigen Mangans.
10. Basische Co-Stabilisatoren, wie z.B. Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Behenat, Mg-Stearat, Na-Ricinoleat, K-Palmitat, Antimonbrenzcatechinat oder Zinkbrenzcatechinat.
11. Nukleierungsmittel, wie z.B. anorganische Stoffe wie z.B. Talk, Metalloxide wie Titandioxid oder Magnesiumoxid, Phosphate, Carbonate oder Sulfate von vorzugsweise Erdalkalimetallen; organische Verbindungen wie Mono- oder Polycarbonsäuren sowie ihre Salze wie z.B. 4-tert-Butylbenzoesäure, Adipinsäure, Diphenylessigsäure, Natriumsuccinat oder Natriumbenzoat; polymere Verbindungen wie z.B. ionische Copolymerisate ("lonomere").
12. Füllstoffe und Verstärkungsmittel, wie z.B. Calciumcarbonat, Silikate, Glasfasern, Glaskugeln, Talk, Kaolin, Glimmer, Bariumsulfat, Metalloxide und -hydroxide, Ruß, Graphit, Holzmehl und Mehle oder Fasern anderer Naturprodukte, synthetische Fasern.
13. Sonstige Zusätze, wie z.B. Weichmacher, Gleitmittel, Emulgatoren, Pigmente, Rheologieadditive, Katalysatoren, Verlaufshilfsmittel, Optische Aufheller, Flammschutzmittel, Antistatika, Treibmittel.
14. Benzofuranone bzw. Indolinone, wie z.B. in U.S. 4,325,863; U.S. 4,338,244; U.S. 5,175,312, U.S. 5,216,052; U.S. 5,252,643; DE-A-4316611; DE-A-4316622; DE-A-4316876; EP-A-0589839 oder EP-A-0591102 beschrieben, oder 3-[4-(2-Acetoxyethoxy)phenyl]-5,7-di-tert-butyl-benzofuran-2-on, 5,7-Di-tert-butyl-3-[4-(2-stearoyloxyethoxy) phenyl]-benzofuran-2-on, 3,3'-Bis[5,7-di-tert-butyl-3-(4-[2-hydroxyethoxy]phenyl)-benzofuran-2-on], 5,7-Di-tert-butyl-3-(4-ethoxyphenyl)benzofuran-2-on, 3-(4-Acetoxy-3,5-dimethytphenyl)-5,7-di-tert-butyl-benzofuran-2-on, 3-(3,5-Dimethyl-4-pivaloyloxy-phenyl)-5,7-di-tert-butyl-benzofuran-2-on, 3-(3,4-Dimethylphenyl)-5,7-di-tert-butyl-benzofuran-2-on, 3-(2,3-Dimethylphenyl)-5,7-di-tert-butyl-benzofuran-2-on.

Die Durchführung des Verfahrens kann in jeglichen temperierbaren und mit einer Rührvorrichtung ausgestatteten Gefässen erfolgen. Dies können beispielsweise geschlossene Apparate, wie Kneter, Mischer oder Rührkessel sein. Das Verfahren kann auch in einem Extruder oder Knetwerk durchgeführt werden. Dabei ist es unerheblich, ob unter einer Inertatmosphäre oder in Anwesenheit von Luftsauerstoff gearbeitet wird.

Thermoplastische Kunststoffe werden üblicherweise bei der Verarbeitung aufgeschmolzen, wobei das Biozid im Kunststoff verteilt wird. Die Verarbeitungstemperaturen hängen vom thermoplastischen Kunststoff ab und sind in der Regel von 150° C bis 280° C.

Bei Duroplasten und vernetzbaren Kunststoffen wird das Biozid beispielsweise im noch nicht ausgehärteten Harz zugemischt und anschliessend die Härtung in der Regel durch Erwärmen ausgeführt. Typische Temperaturen sind von 50° C bis 150° C.

Die Durchführung des Verfahrens kann auch in mehreren Schritten erfolgen wie beispielsweise
a) 1) Vormischung, 2) Reaktion/Formgebung in temperierbarem Gefäß/Form
b) 1) Vormischung, 2) Aufbringen auf Gegenstand, 3) Reaktion/Formgebung in temperierbarer Kammer.

Die Endartikel könne durch Blasverfahren (Folien), Extrusions-, Tiefzieh-, oder Giessverfahren, Spritzguss, Rotationsguss hergestellt werden.

Beispiele für einzelne Kunststoffe und die daraus hergestellten Endartikel sind nachstehend angegeben:
- LDPE: Folien, Gewächshausanwendungen, Rohr, Bewässerungsanwendungen, Inliner;
- HDPE: Folien, Rohr, Spritzgußanwendungen, Rotationsgußanwendungen, künstliches Holz, Uferbefestigungen, Boote, Landungsstege, Inliner;
- MDPE: Rohr, Rotationsgußanwendungen, Bewässerungsanwendungen;
- PC: Gewächshausanwendungen, Dachanwendungen;
- PET: Gewächshausanwendungen, Dachanwendungen, Gewebe;
- PP: Kunstrasen, Bojen, Gartenanwendung, Gewebe;
- UP (ungesättigtes Polyester-Harz): Boote, Wirlpool, Pool, Badewanne, Badanwendungen, Sanitärbereich, Camping, Caravan, Mobilhome, Gartenanwendung, Gelcoat, Laminat;
- Epoxidharze: Boote, Wirlpool, Pool, Badewanne, Badanwendungen, Sanitärbereich, Camping, Caravan, Mobilhome, Gartenanwendung, Gelcoat, Laminat, Küchenanwendungen;
- PVC: Inliner, Hausaußenverkleidung (sidings), Flachdach, Zelte;
- Acrylate (insbesondere PMMA): Whirlpool, Badewanne, Badanwendungen, Sanitärbereich, Laminat, Küchenanwendungen;
- Phenol Formaldehyd Harze: Wirlpool, Badewanne, Badanwendungen, Sanitärbereich, Laminat;
- Aminoplaste (insbesondere Melaminharze): Whirlpool, Badewanne, Badanwendungen, Sanitärbereich, Laminat;
- Polyamide (PA6, PA6.6): Teppich, Faseranwendung, Camping.

Auch Mischungen dieser Kunststoffe und daraus hergestellte Artikel sind möglich.

Ein weiterer Gegenstand der Erfindung ist eine Zusammensetzung, enthaltend einen Kunststoff, ausgewählt aus der Gruppe bestehend aus Polyolefin, Polystyrol, einem halogenhaltigen Polymer, Polyacrylat oder Polymethacrylat, einem Polymer, welches sich von ungesättigten Alkoholen und Aminen bzw. deren Acylderivaten oder Acetalen ableitet, einem Homo- oder Copolymer von cyclischen Ethern, Polyacetal, Polyphenylenoxid oder -sulfid, Polyurethan, Polyamid oder Copolyamid, gesättigter oder ungesättigter Polyester, Polycarbonat, einem Phenol Formaldehyd Harz, einem Epoxidharz oder einem aminoplastischen Harz, und eine biozid wirksame Verbindung aus der Gruppe 2-Methylthio-4-cyclopropy(amino-6-(α, β-dimethylpropylamino)-s-triazin, 2-Methylthio-4-cyclopropylamino-6-tert.butylamino-s-triazin, 2-Methylthio-4-ethylamino-6-tert.butylamino-s-triazin und 2-Methylthio-4-ethylamino-6-(α, β-dimethylpropylamino)-s-triazin.
Ein weiterer Gegenstand der Erfindung ist die Verwendung einer Verbindung, ausgewählt aus der Gruppe, bestehend aus 2-Methylthio-4-cyclopropylamino-6-(α, β-dimethylpropylamino)-s-triazin, 2-Methylthio-4-cyclopropylamino-6-tert.butylamino-s-triazin, 2-Methylthio-4-ethylamino-6-tert.butylamino-s-triazin und 2-Methylthio-4-ethylamino-6-(α, β-dimethylpropylamino)-s-triazin zur bioziden Ausrüstung von Polyolefin, Polystyrol, einem halogenhaltigen Polymer, Polyacrylat oder Polymethacrylat, einem Polymer, welches sich von ungesättigten Alkoholen und Aminen bzw. deren Acylderivaten oder Acetalen ableitet, einem Homo- oder Copolymer von cyclischen Ethern, Polyacetal, Polyphenylenoxid oder -sulfid, Polyurethan, Polyamid oder Copolyamid, gesättigter oder ungesättigter Polyester, Polycarbonat, einem Phenol Formaldehyd Harz, oder einem aminoplastischen Harz.

Ebenfalls Gegenstand der vorliegenden Erfindung sind Kunststoffgegenstände aus einem Polyolefin, Polystyrol, einem halogenhaltigen Polymer, Polyacrylat oder Polymethacrylat, einem Polymer, welches sich von ungesättigten Alkoholen und Aminen bzw. deren Acylderivaten oder Acetalen ableitet, einem Homo- oder Copolymer von cyclischen Ethern, Polyacetal, Polyphenylenoxid oder -sulfid, Polyurethan, Polyamid oder Copolyamid, gesättigter oder ungesättigter Polyester, Polycarbonat, einem Phenol Formaldehyd Harz, einem Epoxidharz oder einem aminoplastischen Harz, enthaltend 2-Methylthio-4-cyclopropylamino-6-(α, β-dimethylpropylamino)-s-triazin, 2-Methylthio-4-cyclopropylamino-6-tert.butylamino-s-triazin, 2-Methylthio-4-ethylamino-6-tert.butylamino-s-triazin oder 2-Methylthio-4-ethylamino-6-(α, β-dimethylpropylamino)-s-triazin

Die nachfolgenden Beispiele veranschaulichen die Erfindung.

### Beispiel 1-3 (Masterbatchherstellung)

2-Methylthio-4-cyclopropylamino-6-tert.butylamino-s-triazin (CAS No. 28159-98-0) wird in ein Polymer gemäss Tabelle 1 eingearbeitet. Hierzu wird eine Mischung aus der Wirksubstanz und dem Polymeren angefertigt und diese Mischung 2 Minuten in einem mechanischen Rührwerk (Henschel) homogenisiert.

Die Mischung wird in einem Extruder unter Stickstoffatmosphäre in Granulatform compoundiert.
Dieses Granulat kann zur Einarbeitung und weiteren Verdünnung herangezogen werden.

**Tabelle 1:**

| Beispiel | [%] Wirksubstanz | Polymer | Compoundierung |
|---|---|---|---|
| 1 | 10 | LDPE (Escorene® LD 100BW) | 220 °C |
| 2 | 25 | PET-G (Eastar® 6763) | 180 °C |
| 3 | 25 | PEBA (Pebax® 2533) | 180 °C |

### Verarbeitungsbeispiele:

### Beispiele 4-12 :

2-Methylthio-4-cyclopropylamino-6-tert.butylamino-s-triazin (A) wird als Reinsubstanz oder in Form eines Masterbatches (Tabelle 1) in ein Polymer (Tabelle 2) eingearbeitet. Hierzu wird eine Mischung aus der Wirksubstanz und dem Polymeren angefertigt und diese Mischung 2 Minuten in einem mechanischen Rührwerk (Henschel) homogenisiert.

Die Mischung wird in einem Extruder unter Stickstoffatmosphäre in Granulatform compoundiert.

Das Granulat wird dann zu Platten umgeformt

**Tabelle 2**

| Beispiel | Wirksubstanz | Polymer | Compoundierung |
|---|---|---|---|
| 4 | 0 % (A) | PP Profax® 6501 | Spritzguss max 230 °C |
| 5 | 0.2 % (A) | PP Profax® 6501 | Spritzguss max 230 °C |
| 6 | 0 % (A) | PMMA Plexiglas® 6N | Spritzguss max 230 °C |
| 7 | 0.5 % (A) | PMMA Plexiglas® 6N | Spritzguss max 230 °C |
| 8 | 1.0 % (A) | PMMA Plexiglas® 6N | Spritzguss max 230 °C |
| 9 | 0 % (A) | PVC Evipol® SH 7020 | Walzfell max. 160 °C |
| 10 | 0.10 % (A) | PVC Evipol® SH 7020 | Walzfell max. 160 °C |
| 11 | 0 % | HDPE MS 6591 | Spritzguss max 230 °C |
| 12 | 0.10 % (A) | HDPE MS 6591 | Spritzguss max 230 °C |

### Beispiele 13-14 :

2-Methylthio-4-cyclopropylamino-6-tert.butylamino-s-triazin (A) wird als Reinsubstanz mit den Monomeren vermischt und in eine Form polymerisiert.

| Beispiel | Wirksubstanz | Polymer |
|---|---|---|
| 13 | 0 | UP* Palatal® P4 |
| 14 | 0.5 % (A) | UP Palatal® P4 |

| | | |
|---|---|---|
| * ungesättigter Polyester | | |

### C) Biologische Wirksamkeit

Agar Platten werden für 7 Tage mit einer unizellulären Algenkultur (Pseudokirchneriella subcapitata Strain No. 61.81 SAG) inkubiert. Dann werden die Prüfkörper aud die Agar Platten plaziert. Das Algenwachstum wird nach 7 Tagen ausgewertet.

Bei den erfindungsgemässen Mischungen wird eine starke Inhibierung festgestellt, ausgedrückt durch die Ausbildung eines Hemmhofes (mm).

**Tabelle 3**

| Beispiel | Hemmhof [mm] | | Beispiel | Hemmhof [mm] |
|---|---|---|---|---|
| 4 | 0 | | | |
| 5 | 8 | | 10 | 30 |
| 6 | 0 | | 11 | 0 |
| 7 | 20 | | 12 | 30 |
| 8 | 25 | | 13 | 0 |
| 9 | 0 | | 14 | 6 |

## Patentansprüche

1. Verfahren zur bioziden Ausrüstung von Kunststoffen, ausgewählt aus der Gruppe, bestehend aus Polyethylen, Polypropylen, Polyvinylchlorid, Polycarbonat, Polyacrylat, Polymethacrylat, Polyethylentherephthalat, ungesättigtem Polyesterharz, Epoxidharz, Phenol Formaldehyd Harz und Melaminharz, **dadurch gekennzeichnet, dass** man
a) entweder während der Verarbeitung der Kunststoffe oder
b) bei den über eine radikalische Polymerisation hergestellten Kunsststoffen bereits während der Polymerisation oder während der Verarbeitung, oder
c) bei den Duroplasten hergestellt aus einem Phenol-Formaldehyd Harz, Epoxidharz oder Melaminharz während der Vernetzungsreaktion
mindestens eine Verbindung, ausgewählt aus der Gruppe 2-Methylthio-4-cyclopropylamino-6-(α, β-dimethylpropylamino)-s-triazin, 2-Methylthio-4-cyclopropylamino-6-tert.butylamino-striazin, 2-Methylthio-4-ethylamino-6-tert.butylamino-s-triazin und 2-Methylthio-4-ethylamino-6-(α, β-dimethylpropylamino)-s-triazin, zusetzt.

2. Verfahren nach Anspruch 1, **dadurch gekennzeichnet, dass** man 2-Methylthio-4-cyclopropylamino-6-tert.butylamino-s-triazin und/oder 2-Methylthio-4-ethylamino-6-tert.butylamino-s-triazin einsetzt.

3. Verfahren nach Anspruch 1, **dadurch gekennzeichnet, dass** man die biozid wirksame Verbindung in einer Menge von 0,01 bis 10 Gew.-% bezogen auf den Kunststoff einsetzt.

4. Verfahren nach Anspruch 1, **dadurch gekennzeichnet, dass** der Kunststoff Polyethylen niederer Dichte (LDPE), Polyethylene hoher Dichte (HDPE), Polypropylen, Polyethylentherephthalat, ungesättigtes Polyesterharz oder Polymethacrylat ist.

5. Verfahren nach Anspruch 1, **dadurch gekennzeichnet, dass** man die biozid wirksame Verbindung bereits bei der Polymerisation von Acrylat oder Methacrylat oder bei der Vernetzung der ungesättigten Polyesterharze zusetzt.

6. Verfahren nach Anspruch 1, **dadurch gekennzeichnet, dass** der Kunststoff zusätzliche Verarbeitungsstabilisatoren und/bder Lichtstabilisatoren enthält.

7. Zusammensetzung, enthaltend einen Kunststoff, ausgewählt aus der Gruppe, bestehend aus Polyethylen, Polypropylen, Polyvinylchlorid, Polycarbonat, Polyacrylat, Polymethacrylat, Polyethylentherephthalat, ungesättigtem Polyesterharz, Epoxidharz, Phenol Formaldehyd Harz und Melaminharz, und eine biozid wirksame Verbindung aus der Gruppe 2-Methylthio-4-cyclopropylamino-6-(α, β-dimethylpropylamino)-s-triazin, 2-Methylthio-4-cyclopropylamino-6-tert.butylamino-s-triazin, 2-Methylthio-4-ethylamino-6-tert.butylamino-s-triazin und 2-Methylthio-4-ethylamino-6-(α, β-dimethylpropylamino)-s-triazin.

8. Verwendung einer Verbindung, ausgewählt aus der Gruppe, bestehend aus 2-Methylthio-4-cyclopropylamino-6-(α, β-dimethylpropylamino)-s-triazin, 2-Methylthio-4-cyclopropylamino-6-tert.butylamino-s-triazin, 2-Methylthio-4-ethylamino-6-tert.butylamino-s-triazin und 2-Methylthio-4-ethylamino-6-(α, β-dimethylpropylamino)-s-triazin zur bioziden Ausrüstung von Polyethylen, Polypropylen, Polyvinylchlorid, Polycarbonat, Polyacrylat, Polymethacrylat, Polyethylentherephthalat, ungesättigtem Polyesterharz, Epoxidharz, Phenol Formaldehyd Harz oder Melaminharz.

9. Kunststoffartikel aus einem Polyethylen, Polypropylen, Polyvinylchlorid, Polycarbonat, Polyacrytat, Polymethacrylat, Polyethylentherephthalat, ungesättigtem Polyesterharz, Epoxidharz, Phenol Formaldehyd Harz oder Melaminharz enthaltend 2-Methylthio-4-cyclopropylamino-6-(α, β-dimethylpropylamino)-s-triazin, 2-Methylthio-4-cyclopropylamino-6-tert.butylamino-s-triazin, 2-Methylthio-4-ethylamino-6-tert.butylamino-s-triazin oder 2-Methylthio-4-ethylamino-6-(α, β-dimethylpropylamino)-s-triazin.

## Claims

1. A process for the biocidal finishing of a plastics material selected from the group consisting of polyethylene, polypropylene, polyvinyl chloride, polycarbonate, polyacrylate, polymethacrylate, polyethylene terephthalate, unsaturated polyester resin, epoxy resin, phenol-formaldehyde resin and melamine resin, which process comprises adding
a) during the processing of the plastics material or,
b) in the case of a plastic material prepared by free-radical polymerisation, during the polymerisation itself or during the processing or,
c) in the case of a thermosetting plastics material prepared from a phenol-formaldehyde resin, epoxy resin or melamine resin, during the crosslinking reaction,
at least one compound selected from the group 2-methylthio-4-cyclopropylamino-6-(α,β-dimethylpropylamino)-s-triazine, 2-methylthio-4-cyclopropylamino-6-tert-butylamino-s-triazine, 2-methylthio-4-ethylamino-6-tert-butylamino-s-triazine and 2-methylthio-4-ethylamino-6-(α,β-dimethylpropylamino)-s-triazine.

2. A process according to claim 1, which comprises using 2-methylthio-4-cyclopropylamino-6-tert-butylamino-s-triazine and/or 2-methylthio-4-ethylamino-6-tert-butylamino-s-triazine.

3. A process according to claim 1, which comprises using the biocidally effective compound in an amount of from 0.01 to 10 % by weight, based on the plastics material.

4. A process according to claim 1, wherein the plastics material is low density polyethylene (LOPE), high density polyethylene (HDPE), polypropylene, polyethylene terephthalate, unsaturated polyester resin or polymethacrylate.

5. A process according to claim 1, which comprises adding the biocidally effective compound during the polymerisation itself of acrylate or methacrylate or during the crosslinking of the unsaturated polyester resin.

6. A process according to claim 1, wherein the plastics material comprises additional processing stabilisers and/or light stabilisers.

7. A composition which comprises a plastics material selected from the group consisting of polyethylene, polypropylene, polyvinyl chloride, polycarbonate, polyacrylate, polymethacrylate, polyethylene terephthalate, unsaturated polyester resin, epoxy resin, phenol-formaldehyde resin and melamine resin, and a biocidally effective compound from the group 2-methylthio-4-cyclopropylamino-6-(α,β-dimethylpropylamino)-s-triazine, 2-methylthio-4-cyclopropylamino-6-tert-butylamino-s-triazine, 2-methylthio-4-ethylamino-6-tert-butylamino-s-triazine and 2-methylthio-4-ethylamino-6-(α,β-dimethylpropylamino)-s-triazine.

8. Use of a compound selected from the group consisting of 2-methylthio-4-cyclopropylamino-6-(α,β-dimethylpropylamino)-s-triazine, 2-methylthio-4-cyclopropylamino-6-tert-butylamino-s-triazine, 2-methylthio-4-ethylamino-6-tert-butylamino-s-triazine and 2-methylthio-4-ethylamino-6-(α,β-dimethylpropylamino)-s-triazine for biocidally finishing polyethylene, polypropylene, polyvinyl chloride, polycarbonate, polyacrylate, polymethacrylate, polyethylene terephthalate, unsaturated polyester resin, epoxy resin, phenol-formaldehyde resin or melamine resin.

9. A plastics article of polyethylene, polypropylene, polyvinyl chloride, polycarbonate, polyacrylate, polymethacrylate, polyethylene terephthalate, unsaturated polyester resin, epoxy resin, phenol-formaldehyde resin or melamine resin, comprising 2-methylthio-4-cyclopropylamino-6-(α,β-dimethylpropylamino)-s-triazine, 2-methylthio-4-cyclopropylamino-6-tert-butylamino-s-triazine, 2-methylthio-4-ethylamino-6-tert-butylamino-s-triazine or 2-methylthio-4-ethylamino-6-(α,β-dimethylpropylamino)-s-triazine.

## Revendications

1. Procédé pour le traitement biocide de matières plastiques choisies dans le groupe formé par le polyéthylène, le polypropylène, le poly(chlorure de vinyle), le polycarbonate, le polyacrylate, le polyméthacrylate, le poly(téréphtalate d'éthylène), une résine polyester insaturé, une résine époxy, une résine phénol-formaldéhyde et une résine mélamine, **caractérisé en ce que** l'on ajoute
a) soit pendant la transformation des matières plastiques, soit
b) dans les matières plastiques produites à l'aide d'une polymérisation radicalaire dès la polymérisation ou pendant la transformation, soit
c) dans les matières plastiques thermodurcissables produites à partir d'une résine phénol-formaldéhyde, d'une résine époxy ou d'une résine mélamine pendant la réaction de réticulation
au moins un composé choisi dans le groupe formé par la 2-méthylthio-4-cyclopropylamino-6-(α,β-diméthylpropylamino)-s-triazine, la 2-méthylthio-4-cyclopropylamino-6-tert-butylamino-s-triazine, la 2-méthylthio-4-éthylamino-6-tert-butylamino-s-triazine et la 2-méthylthio-4-éthylamino-6-(α,β-diméthylpropylamino)-s-triazine.

2. Procédé selon la revendication 1, **caractérisé en ce que** l'on met en oeuvre de la 2-méthylthio-4-cyclopropylamino-6-tert-butylamino-s-triazine et/ou de la 2-méthylthio-4-éthylamino-6-tert-butylamino-s-triazine.

3. Procédé selon la revendication 1, **caractérisé en ce que** l'on met en oeuvre le composé à action biocide à raison de 0,01% à 10% en poids par rapport à la matière plastique.

4. Procédé selon la revendication 1 **caractérisé en ce que** la matière plastique est le polyéthylène basse densité (LDPE), le polyéthylène haute densité (HDPE), le polypropylène, le poly(téréphtalate d'éthylène), une résine polyester insaturé ou le polyméthacrylate.

5. Procédé selon la revendication 1, **caractérisé en ce que** l'on ajoute le composé à action biocide dès la polymérisation de l'acrylate ou du méthacrylate ou dès la réticulation des résines polyester insaturé.

6. Procédé selon la revendication 1, **caractérisé en ce que** la matière plastique contient des stabilisants au traitement et/ou des stabilisants à la lumière supplémentaires.

7. Composition contenant une matière plastique, choisie dans le groupe formé par le polyéthylène, le polypropylène, le poly(chlorure de vinyle), le polycarbonate, le polyacrylate, le polyméthacrylate, le poly(téréphtalate d'éthylène), une résine polyester insaturé, une résine époxy, une résine phénol-formaldéhyde et une résine mélamine, et un composé à action biocide, choisi dans le groupe formé par la 2-méthylthio-4-cyclopropylamino-6-(α,β-diméthyl-propylamino)-s-triazine, la 2-méthylthio-4-cyclopropylamino-6-tert-butylamino-s-triazine, la 2-méthylthio-4-éthylamino-6-tert-butylamino-s-triazine, et la 2-méthylthio-4-éthylamino-6-(α,β-diméthylpropylamino)-s-triazine.

8. Utilisation d'un composé, choisi dans le groupe formé par la 2-méthylthio-4-cyclopropylamino-6-(α,β-diméthylpropylamino)-s-triazine, la 2-méthylthio-4-cyclopropylamino-6-tert-butylamino-s-triazine, la 2-méthylthio-4-éthylamino-6-tert-butylamino-s-triazine et la 2-méthylthio-4-éthylamino-6-(α,β-diméthylpropylamino)-s-triazine pour le traitement biocide de polyéthylène, de polypropylène, de poly(chlorure de vinyle), de polycarbonate, de polyacrylate, de polyméthacrylate, de poly(téréphtalate d'éthylène), d'une résine polyester insaturé, d'une résine époxy, d'une résine phénol-formaldéhyde ou d'une résine mélamine.

9. Article de matière plastique à base de polyéthylène, de polypropylène, de poly(chlorure de vinyle), de polycarbonate, de polyacrylate, de polyméthacrylate, de poly(téréphtalate d'éthylène), d'une résine polyester insaturé, d'une résine époxy, d'une résine phénol-formaldéhyde ou d'une résine mélamine contenant de la 2-méthylthio-4-cyclopropylamino-6-(α,β-diméthylpropylamino)-s-triazine, de la 2-méthylthio-4-cyclopropylamino-6-tert-butylamino-s-triazine, de la 2-méthylthio-4-éthylamino-6-tert-butylamino-s-triazine ou de la 2-méthylthio-4-éthylamino-6-(α,β-diméthylpropylamino)-s-triazine.
